(19) Europäisches Patentamt / European Patent Office / Office européen des brevets

(11) **EP 2 822 157 B1**

(12) **EUROPEAN PATENT SPECIFICATION**

(45) Date of publication and mention
of the grant of the patent:
**10.04.2019  Bulletin 2019/15**

(51) Int Cl.:
*H02K 11/01* *(2016.01)*    *H02K 7/18* *(2006.01)*

(21) Application number: **13175319.6**

(22) Date of filing: **05.07.2013**

(54) **Reduction of bearing currents in a wind turbine generator**

Reduktion von Lagerströmen in einem Windturbinengenerator

Réduction des courants de paliers dans un générateur de turbine éolienne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.01.2015  Bulletin 2015/02**

(73) Proprietor: **Siemens Aktiengesellschaft
80333 München (DE)**

(72) Inventor: **Nieuwenhuizen, John
8700 Horsens (DK)**

(56) References cited:
**WO-A1-2012/093942     US-A- 5 821 652
US-A- 5 979 087     US-A1- 2005 067 916
US-A1- 2012 319 723**

**Description**

Field of Invention

The present invention relates to the field of wind turbines, in particular to structures and methods for reducing bearing currents in wind turbines.

Art Background

During operation of a wind turbine generator, i. e. when a rotor is rotated relative to a stator, a voltage may occur in the bearing, e.g. due to capacitive coupling of a common mode voltage of an inverter from a winding to the rotor. However, the bearing currents resulting from such a voltage may have a negative impact on the lifetime of the bearing and may in some situations cause immediate damage to the bearing.

US 5 821 652 A and WO 2012/093942 A1 describe an electrical machine according to the preamble of claim 1.

Accordingly, there may be a need for a way of reducing electrical currents in wind turbine bearings.

Summary of the Invention

This need may be met by the subject matter according to the independent claims. Advantageous embodiments of the present invention are set forth in the dependent claims.

According to a first aspect of the invention, there is provided an electrical machine for converting rotational energy into electrical energy. The described machine comprises (a) a stator, (b) a winding arranged at the stator, (c) a frame (130, 231, 331, 431) adapted to support the winding and comprising a first wall and a second wall opposing the first wall, (d) a rotor arranged to be rotatable relative to the stator and adapted to induce an electric current in the winding during rotation, and (e) an electrically conductive structure arranged between the winding and the rotor to reduce a capacitance between the winding and the rotor. The electrically conductive structure comprises a first set of strips extending in parallel from the first wall of the frame towards the second wall of the frame and a second set of strips extending in parallel from the second wall of the frame towards the first wall of the frame, wherein each strip of one of the first set of strips and second set of strips covers a part of a space between two strips of the other one of the first set of strips and second set of strips when viewed in a direction from the winding towards the rotor.

This aspect of the invention is based on the idea that the capacitive coupling of common mode voltages between the winding and the rotor can be reduced by adding a structure comprising electrically conductive material between the rotor and the winding.

The rotor is rotatable relative to the stator in the sense that the rotor is e.g. arranged to rotate around the stator (outer rotor) or within the stator (inner rotor). In both cases, the relative movement between the rotor and the stator will cause induction of electric current in the winding.

In the present context, the term "electrically conductive structure" may in particular denote a structure comprising one or more parts made of electrically conductive material, such as copper or another metal or alloy. If the structure comprises more than one part, these parts may be electrically connected or isolated from one another.

The electrically conductive structure is arranged such that it is neither in electrical contact with the rotor nor with the stator winding.

By reducing the capacitance between the winding and the rotor, coupling of common mode voltages from the winding to the rotor can be reduced. Thereby, potentially damaging currents in a bearing which supports the rotor can be correspondingly reduced, such that the risk of bearing damage can be reduced and the bearing lifetime improved.

The frame is preferably made of metal and is electrically isolated from the winding and the rotor. The frame preferably has a U-shaped cross-section within which the winding can be securely supported, e.g. as a winding embedded in a composite material.

The strips are preferably made of an electrically conductive material, such as metal. The strips may be arranged in parallel with each other in a layered structure.

According to an embodiment of the invention, the electrically conductive structure is supported by and electrically connected to the frame.

Thereby, the electrically conductive structure increases the area of the opposing electrically conductive surfaces of rotor and frame while at the same reducing the area of the opposing electrically conductive surfaces of rotor and winding. In other words, the electrically conductive structure increases the capacitance between rotor and frame and decreases the capacitance between rotor and winding. According to a further embodiment of the invention, a ratio between the capacitance between the winding and rotor and a capacitance between the rotor and frame is less than 0,15, such as less than 0,125, such as less than 0,1, such as less than 0,075, such as less than 0,05, such as less than 0,025.

Any of the above ratios is less than half the corresponding ratio in a conventional machine without an electrically conductive structure between the winding and the rotor.

The smaller the ratio, the less coupling of common mode voltages will occur between winding and rotor.

According to an embodiment of the invention, the electrically conductive structure is arranged in an air gap between the winding and the rotor.

By filling at least a part of the air gap between the winding and rotor with electrically conductive material, the capacitance between the winding and the rotor is reduced in comparison to the case where no electrically conductive structure is arranged in the air gap.

According to a further embodiment of the invention, a part of the winding, which faces the rotor, is covered by a wedge, and the electrically conductive structure is integrally formed with the wedge.

In the present context, the term "wedge" may in particular denote a structure designed to protect the winding and to keep the winding in place.

The wedge may comprise a fiber material and/or composite material. The wedge may be a woven or laminated structure.

The electrically conductive structure is integrally formed with the wedge in the sense that the electrically conductive material forms part of the wedge. The electrically conductive material is preferably arranged within the wedge or on a surface of the wedge which faces away from the winding, such that no electrical contact occurs between the conductive material and the winding.

According to a further embodiment of the invention, the electrically conductive structure covers from 50% to 100% of a winding surface facing the rotor, such as from 55% to 95%, such as from 60% to 90%, such as from 65% to 85%, such as from 70% to 80%, such as around 75%.

In other words, a given percentage of the winding surface that faces the rotor is covered by electrically conductive material in the sense that a virtual line connecting a point on the winding surface and a point on the rotor is blocked by electrically conductive material.

Thereby, the capacitance between the winding and the rotor is correspondingly reduced.

According to a further embodiment of the invention, the first set of strips is arranged closer to the winding than the second set of strips.

In other words, the first set of strips form a first layered structure of strips and the second set of strips form a second layered structure of strips.

Thereby, a large amount of electrically conductive material can be arranged in a flexible structure in order to achieve a desired reduction of the capacitance between winding and rotor.

According to a further embodiment of the invention, the strips of the first set of strips at least partially overlap the strips of the second set of strips when viewed in a direction from the winding towards the rotor.

In other words, the two layers of strips will appear as a closed surface (plane) when viewing from the winding towards the rotor. Thereby, a significant reduction in the capacitance between the winding and the rotor can be obtained.

According to a second aspect of the invention there is provided a generator for a wind turbine, the generator comprising an electric machine according to the first aspect or any of the above embodiments.

The generator according to this aspect may be used in a wind turbine with significantly less risk of bearing damage caused by coupling of common mode voltages. Furthermore, the lifetime of the bearing is increased.

According to a third aspect of the invention there is provided a wind turbine comprising a generator according to the second aspect.

The wind turbine according to this aspect has improved reliability and safety due to the reduced risk of bearing damage. Furthermore, the wind turbine will need less maintenance due to the improved bearing lifetime.

According to a fourth aspect of the invention there is provided a method of constructing an electrical machine for converting rotational energy into electrical energy, the method comprising (a) providing a stator having a winding supported by a frame, the frame comprising a first wall and a second wall opposing the first wall, (b) arranging a rotor such that it is rotatable relative to the stator and adapted to induce an electric current in the winding during rotation, and (c) arranging an electrically conductive structure between the winding and the rotor to reduce a capacitance between the winding and the rotor. The electrically conductive structure comprises a first set of strips and a second set of strips, the first set of strips extending in parallel from the first wall of the frame towards the second wall of the frame and the second set of strips extending in parallel from the second wall of the frame towards the first wall of the frame, wherein each strip of one of the first set of strips and second set of strips covers a part of a space between two strips of the other one of the first set of strips and second set of strips when viewed in a direction from the winding towards the rotor.

This aspect of the invention is based on the idea that the capacitive coupling of common mode voltages between the winding and the rotor can be reduced by adding a structure comprising electrically conductive material between the rotor and the winding. Thereby, potentially damaging currents in a bearing which supports the rotor can be correspondingly reduced, such that the risk of bearing damage can be reduced and the bearing lifetime improved.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows an equivalent electric circuit diagram for an electrical machine.

Figure 2 shows a schematic view of an electrical machine according to an embodiment of the present invention.

Figure 3 shows a top view of a wedge structure according to an embodiment of the present invention.

Figure 4A shows a top view of a multi-layer wedge structure according to an embodiment of the present invention.

Figure 4B shows a side view of the wedge structure shown in Figure 4A.

Detailed Description

The illustration in the drawing is schematic. It is noted that in different figures, similar or identical elements are provided with the same reference numerals or with reference numerals which differ only within the first digit.

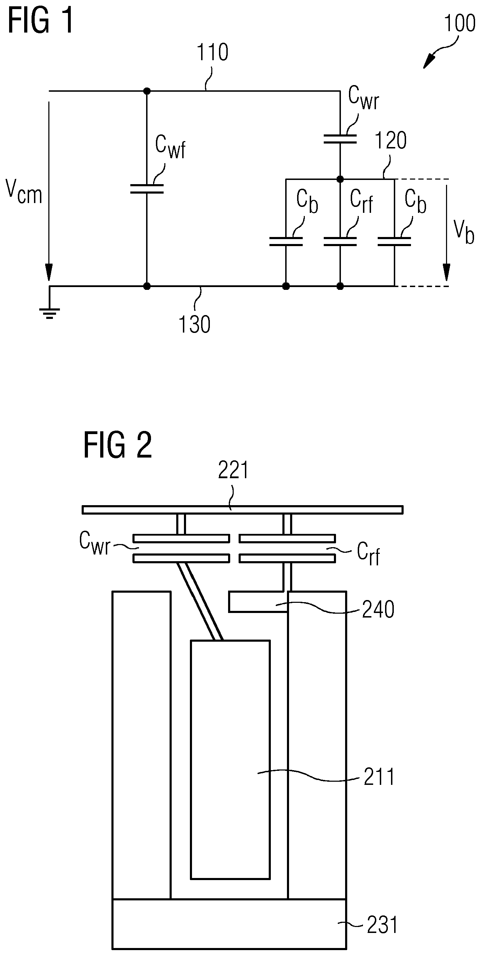

Figure 1 shows an equivalent electric circuit diagram 100 for an electrical machine structure. The structure comprises a stator winding 110, a rotor 120 and a frame 130. The rotor 120 is an inner rotor, i.e. it is designed to rotate within the stator holding the winding 110. The capacitance between winding 110 and frame 130 is $C_{wf}$, the capacitance between winding 110 and rotor 120 is $C_{wr}$, and the capacitance between rotor 120 and frame 130 is shown as a parallel coupling of $C_{rf}$ and bearing capacitances $C_b$. When a common mode voltage $V_{cm}$ occurs between the winding 110 and the grounded frame 130, the bearing voltage $V_b$ is given as:

$$V_b \;=\; V_{cm} * C_{wr} / (C_{wr} + C_{rf} + 2 * C_b)$$

Figure 2 shows a schematic view of an electrical machine 201 according to an embodiment of the present invention. The machine 201 comprises stator winding 211, rotor 221 and frame 231. In this embodiment, the rotor 221 is an outer rotor, i.e. it is designed to rotate around the stator holding the winding 211. Like in Figure 1, the capacitance between rotor 221 and winding 211 is denoted $C_{wr}$ and the capacitance between rotor 221 and frame 231 is denoted $C_{rf}$. Similarly, the capacitance between winding 211 and frame 231 is denoted $C_{wf}$ (not shown). Furthermore, the machine 201 comprises an electrically conductive structure 240 arranged in the gap between rotor 221 and winding 211 such that it is electrically connected to the frame 231. The conductive structure 240 will reduce the resulting capacitance between rotor 221 and winding 211 as the area of the opposing surfaces is reduced. Furthermore, the conductive structure 240 will increase the resulting capacitance between rotor 221 and frame 231 as the area of the opposing surfaces is increased.

The effect of the conductive structure 240 will now be illustrated by a series of calculations based on a simplified view seen from the slot/wedge perspective.

First, the capacitance $C_{wr}$ between winding 211 and rotor 221 as well as the capacitance $C_{rf}$ between rotor 221 and frame 231 are calculated for the case without the conductive structure 240:

K=1 (air)
$E_0$=8,854*10-12 As/Vm
Width of winding: W = 16,4 mm
Length: L = 1706 mm
Area of winding: $A_w$ = 16,4 * 1706 = 27978,4 mm$^2$
Height to rotor: D = depth + airgap = (103,1 - 95,6) + 5 = 7,5 + 5 = 12,5 mm

$$C_{wr} \;=\; K * E_0 * A_w / D \;=\; 19,8 \; pF$$

Area of frame: $A_f$ = Width (66) * length (9,9) * number of fingers (23) * 2 = 30056,4 mm2
Heigth (airgap) = $D_f$ = 5 mm

$$C_{rf} \;=\; K * E_0 * A_f / D_f \;=\; 53,2 \; pF$$

Ratio between capacitances: $C_{wr}/C_{rf}$ = 19,8 / 53,2 = 0,372

Modifying the above calculations to take the conductive structure 240 into account in a case where the width of the conductor 240 is equal to half of the width of the original gap of the slot gives the following results: $A_w$ is reduced to half the above value, i.e. $A_w$ = 13989,2 mm$^2$, and $A_f$ is increased by the same amount, i.e. $A_f$ = 44045,6 mm$^2$. These areas result in $C_{wr}$ = 9,9 pF, $C_{rf}$ = 78 pF and $C_{wr}/C_{rf}$ = 0,127. Accordingly, reducing the area by 50% results in a reduction of the bearing voltage by about 34%.

Similar calculations can be made for conductive structures 240 having other dimensions. A few examples are given below.

If the width of the conductive structure 240 is 80% of the original gap, then $C_{wr}$ = 3,96 pF, $C_{rf}$ = 96,4 pF and $C_{wr}/C_{rf}$ = 0,041. Further, if the width of the conductive structure 240 is 90% of the original gap, then $C_{wr}$

= 1,98 pF, $C_{rf}$ = 97,8 pF and $C_{wr}/C_{rf}$ = 0,020. Finally, if the width of the conductive structure 240 is 95% of the original gap, then $C_{wr}$ = 0,99 pF, Crf = 100 pF and Cwr/Crf = 0,0099.

As can be seen, increasing the size of the conductive structure 240 results in significant damping of the bearing voltage caused by the common mode voltage from the winding 211. In fact, a filling of 95% results in a signal level of about 1% compared to the original situation, or a signal reduction of about 40 dB.

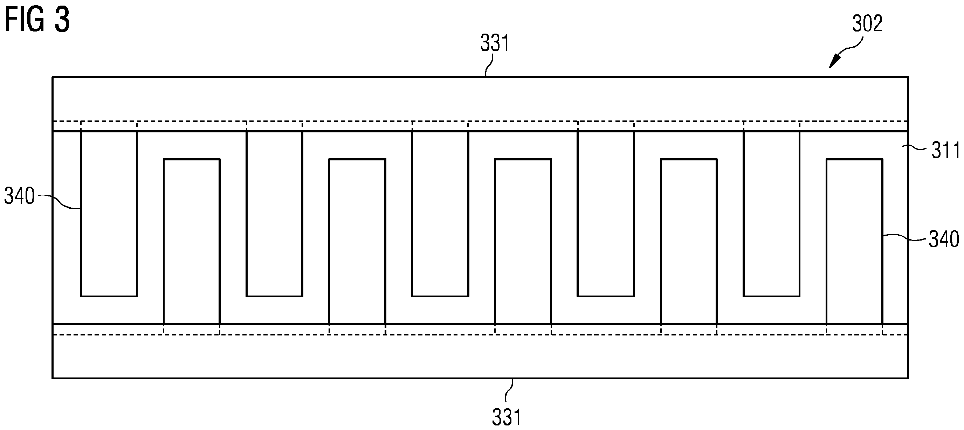

Figure 3 shows a top view of a wedge structure 302 according to an embodiment of the present invention. The wedge 302 is arranged on top of winding 311 between the walls of frame 331. The wedge 302 comprises an electrically conductive structure 340 in form of conductive strips which are arranged in parallel across the surface of the winding 311. The conductive strips are alternately fastened on the opposing sides of the frame walls and are electrically connected with the frame 331. As can be seen, the conductive strips reduce the area of the winding surface which is "visible" to a rotor arranged above the wedge 302. Accordingly, the capacitance between winding and rotor is correspondingly reduced as the area of the opposing surfaces is reduced. Similarly, the capacitance between rotor (not shown) and frame 331 is increased as the conductive structure 340 increases the area of the opposing surfaces correspondingly. Thus, the effect illustrated by the calculations discussed above with regard to Figure 2 can be obtained by the wedge 302.

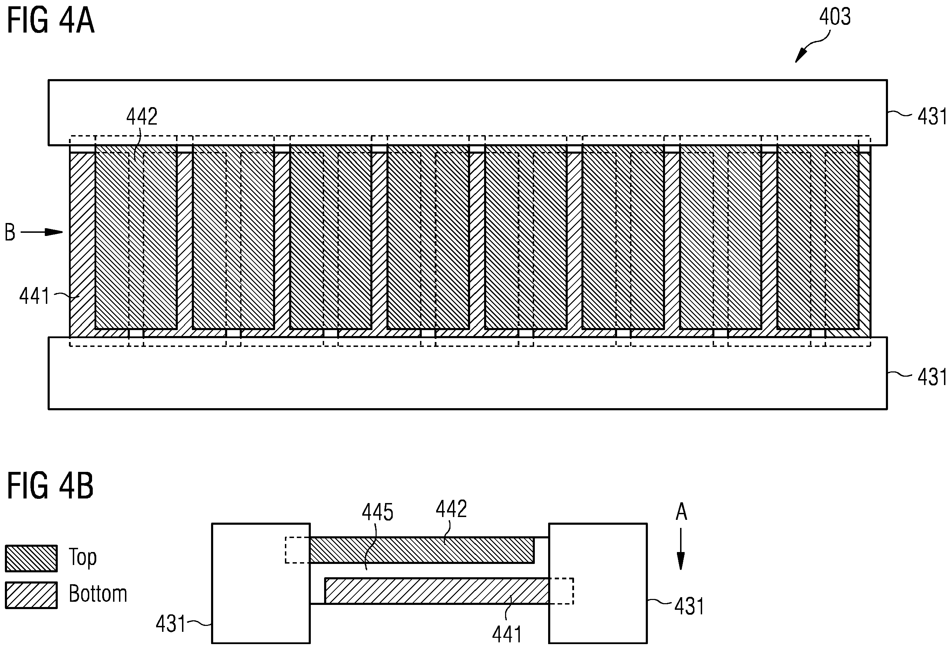

Figures 4A and 4B illustrate a multi-layer wedge structure 403 according to a further embodiment of the present invention. More specifically, Figure 4A shows a top view of the multi-layer wedge structure 403 while Figure 4B shows a side view of the wedge structure 403 shown in Figure 4A. The side view of Figure 4B corresponds to the direction from left to right in Figure 4A as indicated by the arrow B.

As shown, the wedge 403 comprises a lower conductive structure 441 and an upper conductive structure 442. The upper conductive structure 442 comprises a plurality of conductive strips arranged at one wall of the frame 431 (upper wall in Figure 4A and left wall in Figure 4B) while the lower conductive structure 441 comprises a plurality of conductive strips arranged at the opposite wall of the frame 431 (lower wall in Figure 4A and right wall in Figure 4B). All strips are electrically connected to the frame 431 and equally spaced but the upper set of strips 442 is displaced relative to the lower set of strips 441 such that most of the space between two neighboring strips of one set is covered by a strip of the other set and vice versa. Thereby, a very high degree of the surface area of the winding facing the rotor can be covered by the conductive strips such that the capacitance between rotor and winding is correspondingly reduced in comparison to the case without the strips. As shown above, the reduction of the capacitance $C_{wr}$ effectively reduces the bearing voltage (and corresponding bearing current) caused by common mode voltage coupling from the winding. Thereby, the risk of bearing failure is reduced and the lifetime of a bearing significantly increased.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. An electrical machine for converting rotational energy into electrical energy, the machine comprising
a stator,
a winding (110, 211, 311) arranged at the stator,
a frame (130, 231, 331, 431) adapted to support the winding and comprising a first wall and a second wall opposing the first wall,
a rotor (120, 221) arranged to be rotatable relative to the stator and adapted to induce an electric current in the winding during rotation, and
an electrically conductive structure (240, 340, 441, 442) arranged between the winding and the rotor to reduce a capacitance ($C_{wr}$) between the winding and the rotor,
**characterized in that** the electrically conductive structure comprises a first set of strips extending in parallel from the first wall of the frame towards the second wall of the frame and a second set of strips extending in parallel from the second wall of the frame towards the first wall of the frame, wherein each strip of one of the first set of strips and second set of strips covers a part of a space between two strips of the other one of the first set of strips and second set of strips when viewed in a direction from the winding towards the rotor.

2. The machine according to the preceding claim, wherein the electrically conductive structure is supported by and electrically connected to the frame.

3. The machine according to any of the preceding claims, wherein a ratio between the capacitance ($C_{wr}$) between the winding and rotor and a capacitance ($C_{rf}$) between the rotor and frame is less than 0,15.

4. The machine according to any of the preceding claims, wherein the electrically conductive structure is arranged in an air gap between the winding and the rotor.

5. The machine according to any of the preceding claims, wherein a part of the winding, which faces the rotor, is covered by a wedge (302, 403), and wherein the electrically conductive structure is integrally formed with the wedge.

6. The machine according to any of the preceding claims, wherein the electrically conductive structure covers from 50% to 100% of a winding surface facing the rotor.

7. The machine according to any of the preceding claims, wherein the first set of strips is arranged closer to the winding than the second set of strips.

8. The machine according to the preceding claim, wherein the strips of the first set of strips at least partially overlap the strips of the second set of strips when viewed in the direction from the winding towards the rotor.

9. A generator for a wind turbine, the generator comprising an electric machine (201) according to any of the preceding claims.

10. A wind turbine comprising a generator according to the preceding claim.

11. A method of constructing an electrical machine for converting rotational energy into electrical energy, the method comprising
providing a stator having a winding (110, 211, 311) supported by a frame (130, 231, 331, 431), the frame comprising a first wall and a second wall opposing the first wall,
arranging a rotor (120, 221) such that it is rotatable relative to the stator and adapted to induce an electric current in the winding during rotation, and
arranging an electrically conductive structure (240, 340, 441, 442) between the winding and the rotor to reduce a capacitance ($C_{wr}$) between the winding and the rotor,
wherein the electrically conductive structure comprises a first set of strips and a second set of strips, the first set of strips extending in parallel from the first wall of the frame towards the second wall of the frame and the second set of strips extending in parallel from the second wall of the frame towards the first wall of the frame, wherein each strip of one of the first set of strips and second set of strips covers a part of a space between two strips of the other one of the first set of strips and second set of strips when viewed in a direction from the winding towards the rotor.

**Patentansprüche**

1. Elektrische Maschine zum Umwandeln von Rotationsenergie in elektrische Energie, wobei die Maschine Folgendes umfasst:

einen Stator,
eine an dem Stator angeordnete Wicklung (110, 211, 311),
einen Träger (130, 231, 331, 431), der so ausgelegt ist, dass er die Wicklung trägt, und das eine erste Wand und eine der ersten Wand gegenüberliegende zweite Wand umfasst,
einen Rotor (120, 221), der so angeordnet ist, dass er in Bezug zu dem Stator drehbar ist, und so ausgelegt ist, dass er beim Drehen einen elektrischen Strom in der Wicklung erzeugt, und eine elektrisch leitende Konstruktion (240, 340, 441, 442), die zwischen der Wicklung und dem Rotor angeordnet ist, um eine Kapazität ($C_{wr}$) zwischen der Wicklung und dem Rotor zu reduzieren,
**dadurch gekennzeichnet, dass** die elektrisch leitende Konstruktion Folgendes umfasst: einen ersten Satz Streifen, die von der ersten Wand des Trägers aus parallel zur zweiten Wand des Trägers hin verlaufen, und einen zweiten Satz Streifen, die von der zweiten Wand des Trägers aus zur ersten Wand des Trägers hin verlaufen, wobei jeder Streifen aus dem ersten oder dem zweiten Satz Streifen bei Betrachtung in einer Richtung von der Wicklung hin zum Rotor einen Teil eines Zwischenraums zwischen zwei Streifen des jeweils anderen Satzes Streifen bedeckt.

2. Maschine nach dem vorhergehenden Anspruch, wobei die elektrisch leitende Konstruktion von dem Träger getragen wird und elektrisch damit verbunden ist.

3. Maschine nach einem der vorhergehenden Ansprüche, wobei ein Verhältnis zwischen der Kapazität ($C_{wr}$) zwischen der Wicklung und dem Rotor und einer Kapazität ($C_{rf}$) zwischen dem Rotor und dem Träger unter 0,15 liegt.

4. Maschine nach einem der vorhergehenden Ansprüche, wobei die elektrisch leitende Konstruktion in einem Luftspalt zwischen der Wicklung und dem Rotor angeordnet ist.

5. Maschine nach einem der vorhergehenden Ansprüche, wobei ein Teil der Wicklung, der dem Rotor zugewandt ist, mit einem Keil (302, 403) bedeckt und die elektrisch leitende Konstruktion einstückig mit dem Keil ausgebildet ist.

6. Maschine nach einem der vorhergehenden Ansprüche, wobei die elektrisch leitende Konstruktion 50% bis 100% einer dem Rotor zugewandten Wicklungsfläche bedeckt.

7. Maschine nach einem der vorhergehenden Ansprüche, wobei der erste Satz Streifen näher an der Wicklung angeordnet ist als der zweite Satz Streifen.

8. Maschine nach dem vorhergehenden Anspruch, wobei die Streifen des ersten Satzes Streifen bei Betrachtung in der Richtung von der Wicklung hin zum Rotor die Streifen des zweiten Satzes Streifen zumindest teilweise überlappen.

9. Generator für eine Windenergieanlage, der eine elektrische Maschine (201) nach einem der vorhergehenden Ansprüche umfasst.

10. Windenergieanlage mit einem Generator nach dem vorhergehenden Anspruch.

11. Verfahren zum Bauen einer elektrischen Maschine zum Umwandeln von Rotationsenergie in elektrische Energie, das Folgendes umfasst:

Bereitstellen eines Stators mit einer Wicklung (110, 211, 311), die von einem Träger (130, 231, 331, 431) getragen wird, wobei der Träger eine erste Wand und eine der ersten Wand gegenüberliegende zweite Wand umfasst, derartiges Anordnen eines Rotors (120, 221), dass er in Bezug zu dem Stator drehbar ist und er so ausgelegt ist, dass er beim Drehen einen elektrischen Strom in der Wicklung erzeugt, und Anordnen einer elektrisch leitenden Konstruktion (240, 340, 441, 442) zwischen der Wicklung und dem Rotor, um eine Kapazität ($C_{wr}$) zwischen der Wicklung und dem Rotor zu reduzieren, wobei die elektrisch leitende Konstruktion Folgendes umfasst: einen ersten und einen zweiten Satz Streifen, wobei der erste Satz Streifen von der ersten Wand des Trägers aus parallel zur zweiten Wand des Trägers hin verläuft und der zweite Satz Streifen von der zweiten Wand des Trägers aus zur ersten Wand des Trägers hin verläuft, wobei jeder Streifen aus dem ersten oder dem zweiten Satz Streifen bei Betrachtung in einer Richtung von der Wicklung hin zum Rotor einen Teil eines Zwischenraums zwischen zwei Streifen des jeweils anderen Satzes Streifen bedeckt.

**Revendications**

1. Machine électrique destinée à convertir une énergie de rotation en énergie électrique, la machine comprenant
un stator,
un enroulement (110, 211, 311) agencé au niveau du stator,
une ossature (130, 231, 331, 431) adaptée pour supporter l'enroulement et comprenant une première paroi et une seconde paroi opposée à la première paroi,
un rotor (120, 221) agencé pour être apte à entrer en rotation par rapport au stator et adapté pour induire un courant électrique dans l'enroulement pendant une rotation, et
une structure électriquement conductrice (240, 340, 441, 442) agencée entre l'enroulement et le rotor pour réduire une capacité ($C_{wr}$) entre l'enroulement et le rotor,
**caractérisée en ce que** la structure électriquement conductrice comprend un premier ensemble de bandes s'étendant de manière parallèle à partir de la première paroi de l'ossature en direction de la seconde paroi de l'ossature et un second ensemble de bandes s'étendant de manière parallèle à partir de la seconde paroi de l'ossature en direction de la première paroi de l'ossature, dans laquelle chaque bande de l'une du premier ensemble de bandes et du second ensemble de bandes recouvre une partie d'un espace entre deux bandes de l'autre du premier ensemble de bandes et du second ensemble de bandes lorsqu'on les observe dans une direction à partir de l'enroulement en direction du rotor.

2. Machine selon la revendication précédente, dans laquelle la structure électriquement conductrice est supportée par et connectée électriquement à l'ossature.

3. Machine selon l'une quelconque des revendications précédentes, dans laquelle un rapport entre la capacité ($C_{wr}$) entre l'enroulement et le rotor et une capacité ($C_{rf}$) entre le rotor et l'ossature est inférieur à 0,15.

4. Machine selon l'une quelconque des revendications précédentes, dans laquelle la structure électriquement conductrice est agencée dans un entrefer entre l'enroulement et le rotor.

5. Machine selon l'une quelconque des revendications précédentes, dans laquelle une partie de l'enroulement, qui fait face au rotor, est recouverte par une cale (302, 403), et dans laquelle la structure électriquement conductrice est formée d'un seul tenant avec la cale.

6. Machine selon l'une quelconque des revendications précédentes, dans laquelle la structure électriquement conductrice recouvre de 50 % à 100 % d'une surface d'enroulement faisant face au rotor.

7. Machine selon l'une quelconque des revendications précédentes, dans laquelle le premier ensemble de bandes est agencé plus près de l'enroulement que le second ensemble de bandes.

**8.** Machine selon la revendication précédente, dans laquelle les bandes du premier ensemble de bandes chevauchent au moins partiellement les bandes du second ensemble de bandes lorsqu'on les observe dans la direction à partir de l'enroulement en direction du rotor.

**9.** Générateur pour une éolienne, le générateur comprenant une machine électrique (201) selon l'une quelconque des revendications précédentes.

**10.** Eolienne comprenant un générateur selon la revendication précédente.

**11.** Procédé de construction d'une machine électrique destinée à convertir une énergie de rotation en énergie électrique, le procédé comprenant
le fait de fournir un stator ayant un enroulement (110, 211, 311) supporté par une ossature (130, 231, 331, 431), l'ossature comprenant une première paroi et une seconde paroi opposée à la première paroi,
le fait d'agencer un rotor (120, 221) de telle sorte qu'il est apte à entrer en rotation par rapport au stator et adapté pour induire un courant électrique dans l'enroulement pendant une rotation, et
le fait d'agencer une structure électriquement conductrice (240, 340, 441, 442) entre l'enroulement et le rotor pour réduire une capacité ($C_{wr}$) entre l'enroulement et le rotor, dans lequel la structure électriquement conductrice comprend un premier ensemble de bandes et un second ensemble de bandes, le premier ensemble de bandes s'étendant de manière parallèle à partir de la première paroi de l'ossature en direction de la seconde paroi de l'ossature et le second ensemble de bandes s'étendant de manière parallèle à partir de la seconde paroi de l'ossature en direction de la première paroi de l'ossature, dans laquelle chaque bande de l'une du premier ensemble de bandes et du second ensemble de bandes recouvre une partie d'un espace entre deux bandes de l'autre du premier ensemble de bandes et du second ensemble de bandes lorsqu'on les observe dans une direction à partir de l'enroulement en direction du rotor.

## FIG 1

## FIG 2

FIG 3

331

302

311

340

340

331

EP 2 822 157 B1

# FIG 4A

# FIG 4B

Top

Bottom

EP 2 822 157 B1

**EP 2 822 157 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5821652 A
- WO 2012093942 A1